# EUROPEAN PATENT APPLICATION

(11) **EP 2 052 954 A1**
(43) Date of publication of application: **29.04.2009**
(21) Application number: 07119084.7
(22) Date of filing: 23.10.2007
(51) Int. Cl.: B62H 5/04, B62H 5/06

(54) **Locking arrangement and method for operating the locking arrangement**

(71) Applicant: Nonlock Zenius ApS, 2200 København N (DE)
(72) Inventor: Mønster, Kuno, 2605 Brøndby (DK); Bjørk, John, 2860, Søborg (DK)
(74) Representative: Holme Patent A/S

(57) **Abstract**

A locking arrangement for a bicycle with a frame head tube (3) and a steering stem (4) which defines a steering axis (4') and is rotatably mounted in the frame head tube (3), said locking arrangement comprising a transverse opening (23) formed in the steering stem (4), a lock housing (9) which defines an axis (9') and is rigidly attached to a sleeve (7), a lock rod (27) arranged for being displaced in the lock housing (9) between an advanced position where the lock rod (27) can extend into said transverse opening (23,24) and a retracted position where that is not possible, a lock (12) which is mounted in the lock housing (9) and is adapted to lock the lock rod (27) in both the advanced and retracted position, and a pair of handlebars (10) connected to the sleeve (7). The axis (9') of the lock housing (9) intersects the steering axis (4'), a longitudinally extending channel (26) is formed in the housing, and the lock (12) is axially movable in the channel (26). The bicycle can by means of this construction effectively be secured against theft when left in a park mode in e.g. an open space and is safe to ride when rearranged from the park mode to a ride mode.

## Description

The invention relates to a locking arrangement for a bicycle with a frame head tube and a steering stem, which defines a steering axis and rotateable is mounted in the frame head tube. The locking arrangement comprises a transverse opening formed in the steering stem, a lock housing which defines an axis and rigidly is attached to the sleeve, a lock rod arranged for being displaced in the lock housing between an advanced position where the lock rod can extend into said transverse opening and a retracted position where that is not possible, a lock which is mounted in the lock housing and is adapted to lock the lock rod in both the advanced and retracted position, and a pair of handlebars connected to the sleeve.

The invention also relates to a method for operating the bicycle.

The term "bicycle" is in the following used for vehicles, which during driving is steered by means of a pair of handlebars. By way of example can be mentioned tricycles, motorcycles, motorised bicycles and scooters.

A bicycle is a relatively simple transport device. Most people has got a bicycle since it is an inexpensive means of transport and inter alia is provided also with advantages like taking up very little space when stored at home and being allowed to park nearly everywhere in an open space, like e.g. a street.

Bicycles are popularly used for transport over shorter distances. By way of example can be mentioned the way from the home of the cyclist to a shop or a place of work where the bicycle often need to be parked in an open space.

So, a large number of bicycles are nearly always parked in open spaces of e.g. a city where they could be attractive coals for thiefs, which occasionally want a bicycle.

The bicycles therefore generally are provided with some kind of protection devices against being stolen. Various types of such devices have been developed during the years.

Thus can be mentioned a chain with a lock for binding the bicycle to some stationery object such as a lamppost. It is however difficult and also tiresome to use such a chain for the purpose and a suitable stationary object can often not be found.

Many cyclists therefore prefer locking arrangements with locks, which are forming an integral part of the bicycle.

Some of such locks are equipped with a bolt, which in the locked position of the lock is extending through the spokes of a wheel of the bicycle. A bicycle with such lock can be secured everywhere, as the lock is not dependant on any stationary object for securing the bicycle. The lock moreover is easy to operate. A draw back is however that a blow by means of e.g. a stone, relatively easily can unlock the lock.

Another type of locks is used for locking the pair of handlebars of the bicycle to a firm part of he bicycle, e.g. the frame thereby making it impossible to ride the bicycle as it is now impossible to turn the handlebars. It is however relatively easy forcibly to release the lock connection between the handlebars and the frame.

From the publication JP 2000289667 A is known a third way to secure a bicycle against theft. In this case a lock is used as well for protecting the bicycle against being stolen. The lock is however operating in quite another way than the above-mentioned locks since the locking operation consists in releasing the usually rigid connection between the handlebars and the steering stem.

Said rigid connection is necessary for being able to ride the bicycle. Therefore, when releasing the connection it is not possible to ride the bicycle whereby advantageously is obtained that the bicycle effectively has been protected against at least occasional theft.

The pair of handlebars is attached to a sleeve, which rotateable is mounted on the steering stem. A locking housing for the lock is integral connected with the sleeve in a position offset from the sleeve. A pawl can, by operating the lock, be displaced in and out of a recess formed in the steering stem for alternating connecting and disconnecting the sleeve and the steering stem.

The connection achieved by means of this known releasable connection between the steering stem and the sleeve is however relatively weak owing to the fact that the recess can be formed only with a small depth whereby the security by riding the bicycle is affected.

The possible displacement of the pawl in the lock housing also is little. The pawl therefore will be close to the recess in retracted position so that there is a risk for that the pawl can be brought into engagement with the recess by means of a blow on the lock housing, which moreover is offset placed in relation to the recess with the result that a moment is acted upon the lock housing when being hit with a relatively heavy object like a stone. A thief then can ride the bicycle and in this way quickly remove it from the place where it is parked.

The disadvantages of the above known technique are remedied according to the invention by,
in a first aspect providing a locking arrangement of the kind mentioned in the opening paragraph, that can be effectively secured against theft, locking arrangement
in a second aspect providing a locking arrangement of the kind mentioned in the opening paragraph, that is easy to secure against thefts,
in a third aspect providing a locking arrangement of the kind mentioned in the opening paragraph, that is easy to park,
in a fourth aspect providing a locking arrangement of the kind mentioned in the opening paragraph, that is safe to ride when not being secured against thefts,
in a fifth aspect providing a locking arrangement of the kind mentioned in the opening paragraph, that cannot be used without a key or similar locking device,
in a sixth aspect providing a locking arrangement of the kind mentioned in the opening paragraph, that has a simple and inexpensive construction, and
in a seventh aspect providing a method for operating the locking arrangement.

The novel and unique feature according to the invention is the fact, that a longitudinally extending channel is formed in the lock housing, and that the lock axially displaceable is mounted in the channel.

By means of this construction is obtained an effective and at the same time inexpensive protection against thefts. The protection is simply functioning in that way that the connection between the pair of handlebars and the steering stem is disconnected when parking the bicycle in e.g. an open space so that it becomes impossible to ride the bicycle.

Thereby advantageously also is achieved that the key to lock and unlock the bicycle always is carried along by the cyclist since it is not possible to ride the bicycle without the key for bringing the bicycle in riding mode. The cyclist therefore cannot forget the key.

The lock of a bicycle is conventionally a firm part of a bicycle. The lock according to the invention is opposite a removable part of the bicycle resulting in the advantage that a number of bicycles used by more people, e.g. mail carriers can have locks using the same key.

It is important that the bicycle is safe to ride. That is according to the invention achieved by forming the transverse opening in the steering stem as a through opening, forming a second transverse through opening in the steering stem diametrical opposite the first one, and forming a third transverse opening in the sleeve, whereby the third opening is communicating with the second opening in a specific angle position of the sleeve in relation to the steering stem.

A large moment and thereby a strong and safe connection between the pair of handlebars and the steering stem can be achieved by means of this construction by simply thrusting the lock rod through all three transverse openings.

The lock can, according to the invention, be of that kind which is formed with a pivotable pawl and a tongue. The channel of the lock housing can in this case be formed with a longitudinally extending groove and a foremost and rearmost, seen in the opposite direction of the sleeve, at least partly ring formed groove, whereby the pawl is engaging the foremost and rearmost ring formed groove in the advanced and retracted locking position, respectively of the rod and the tongue simultaneously is engaging the longitudinally extending groove.

Thereby is advantageously obtained that the lock can operate in a proper way since the lock is secured against rotation while being displaced in the channel of the housing so that the pawl securely can pivot into the ring formed grooves in the advanced and retracted position of the rod, respectively.

In a preferred embodiment, according to the invention, can a spring, which is placed in the channel be acting upon the rod or locking cylinder with a spring power directed in the opposite direction of the sleeve whereby the lock is made easy to operate.

For reducing the risk for that a blow upon the outer end of the lock could re-establish the connection between the pair of handlebars and the steering stem of a bicycle being parked can the end face of the rod, according to the invention, be placed at a distance between 0,5 - 5 mm from the steering stem.

A blow could, without any such distance, deform the material so much at that area where the pivotable pawl of the lock is engaging the rearmost ring formed groove in a bicycle being parked that the rod could engage the closest opening in the steering stem and a thief thereby would be able to ride the bicycle.

The invention will be explained in greater details below where further advantageous properties and example embodiments are described with reference to the drawings, in which
Fig. 1 shows, seen in perspective, a fragment of a bicycle according to the invention in riding mode,
Fig. 2 shows the same in parking mode,
Fig. 3 shows fragmentary a lateral section of a locking arrangement in riding mode for the bicycle shown in fig. 1,
Fig. 4 shows the same in parking mode,
Fig. 5 shows a cross section taken along the line V - V in fig. 4.

The term "riding mode" is here standing for the fact that the locking arrangement is set in a state where the bicycle can be used for riding and the term "parking mode" for the fact that the locking arrangement is set in a state where the bicycle cannot be used for riding.

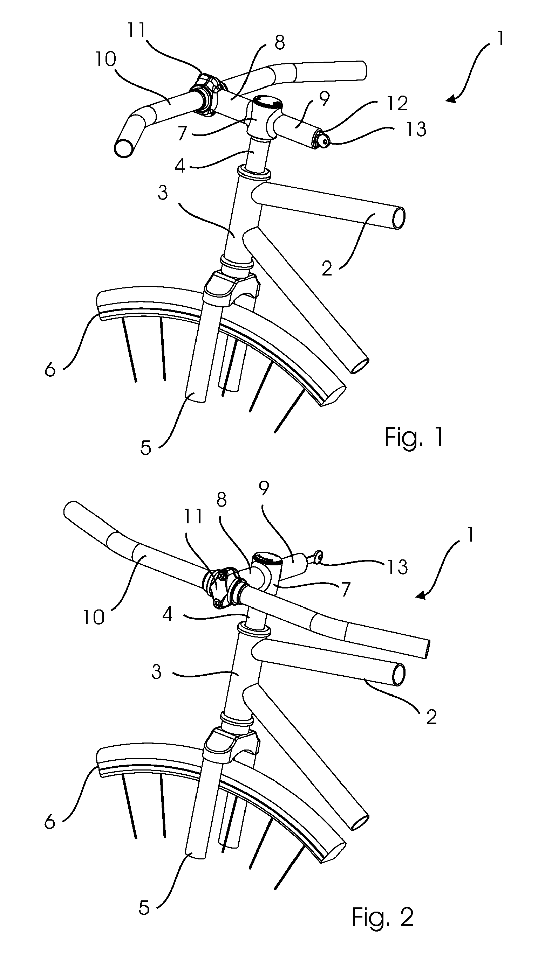

The bicycle 1 seen in fig. 1 and 2 comprises a frame 2 with a frame head tube 3 in which a steering stem 4 rotateable is mounted.

The lower part of the steering stem is connected with a front fork 5 in which a front wheel 6 rotateable is mounted while a sleeve 7 rotateable is mounted upon the upper part of the steering stem.

An elongated connection member 8 and a lock housing 9 form integral parts of the sleeve. They extend crosswise of the sleeve and in opposite directions in the figures. They can however, within the scope of the invention, form any suitable angle with each other.

A pair of handlebars 10 is by means of a clamp 11 attached to the elongated connection member 8 and a lock 12 is mounted in the lock housing (fig. 1). A key 13 for operating the lock is inserted in the lock.

The bicycle is in fig. 1 in the riding mode since the sleeve 7 with the handlebars 10 by means of the locking arrangement according to the invention has been rigidly connected with the steering stem 4 which again is rigidly connected with the front fork 5 and thereby with the front wheel 6 so that the cyclist (not shown) is able, as required, to turn the front wheel when riding the bicycle.

The locking arrangement has in fig. 2 been set in such way that the connection between the handlebars and the steering stem has been disconnected. Now the cyclist (not shown) cannot ride the bicycle since he is not able to turn the front wheel by means of the handlebars. The bicycle is in its parking mode where it effectively is protected against being stolen by a thief who wants a bicycle for e.g. occasionally using.

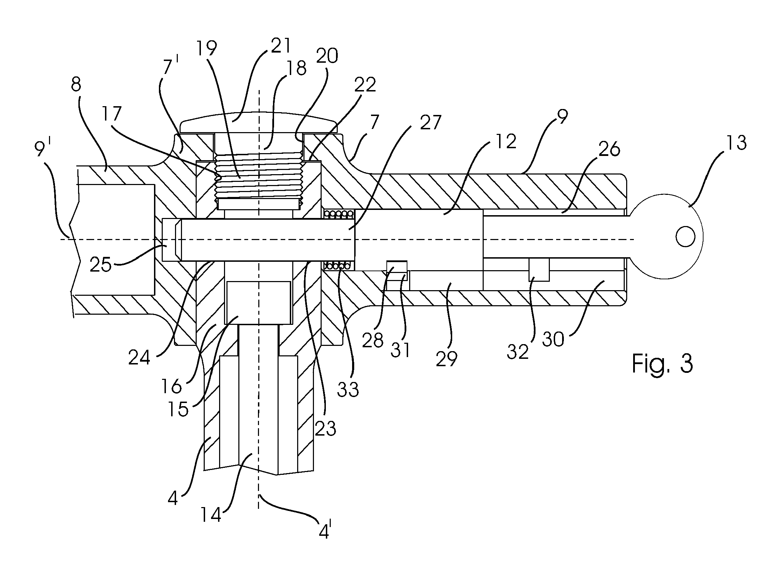

The above-mentioned advantages are, as it appears, achieved by means of the locking arrangement according to the invention which arrangement in the following is explained in greater details by reference to fig. 3, 4 and 5.

The steering stem 4 is, in a well-known way, attached to the front fork 5 by means of an elongated screw 14, the head 15 of which being countersunk in an upper tubular part 16 of the steering stem 4.

An inner thread 17 is formed on top of the steering stem 4 and a top screw 18 with an outer thread 19 is screwed into the inner thread 17 of the steering stem in such way that a space 20 is leaved between a head 21 of the top screw 18 and the upper face 22 of the steering stem.

The sleeve 7 is furthermore furnished with an inwardly projecting collar 7' fitting into the space 20 with a clearance in between so that the sleeve is allowed to rotate in relation to the steering stem while at the same time being secularly kept in correct axial position on this.

A first and second transverse opening 23, 24 are formed in the steering stem diametrical opposite each other. In the sleeve is moreover formed a third transverse opening 25 which communicate with the second transverse opening in an angle position of the sleeve in relation to the steering stem where the pair of handlebars is turned into position for riding the bicycle. That is possible because the axis 9' of the lock housing is at least in the main intersecting the axis 4' of the steering stem 4.

A channel 26 is formed in the lock housing 9 diametrically opposite the transverse opening 25 in the sleeve 7. The channel therefore communicates with the first transverse opening 23 when the third transverse opening 25 is communicating with the second transverse opening 24 that is when the bicycle is in riding mode.

A lock rod 27 is displaceable mounted in the channel 26 between an advanced position where the lock rod is penetrating the transverse openings 23, 24, 25 and the bicycle therefore is in riding mode and a retracted position where that is not possible and the bicycle therefore is in parking mode.

In the riding mode of the bicycle is the lock rod, as mentioned above, simultaneously engaging all three transverse openings. That means that the connection between the pair of handlebars and the steering stem is extremely strong. A cyclist riding the bicycle thereby effectively is secured against accidents coming from failing of this connection.

The end part of the channel 26, placed at the first transverse opening 23, can in an expedient embodiment of the invention be arranged as a fourth transverse opening (not shown), thereby increasing the strength of the connection between the pair of handlebars and the steering stem and at the same time the riding security.

The lock rod is, in the parking mode of the bicycle, withdrawn from said transverse openings so that the connection between the pair of handlebars and the steering stem is disconnected. Now it is not any more possible to ride the bicycle, which therefore will be of no interest for a thief.

The lock rod 27 is in this case attached to the lock 12, which is of that kind which is furnished with a pivotable pawl 28 and a tongue 29.

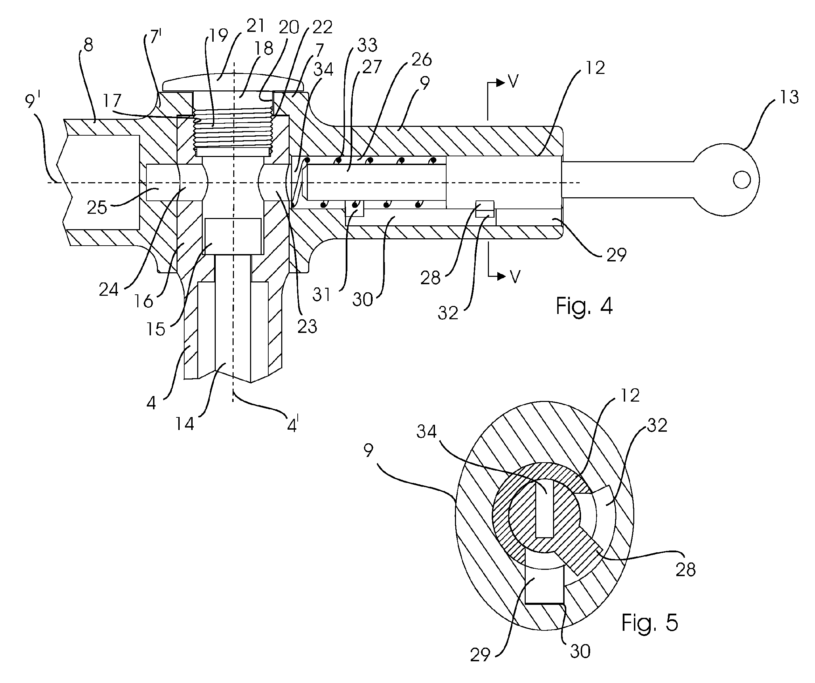

The channel 26 is formed with a longitudinally extending groove 30, a section of a foremost ring formed groove 31 and a section of a rearmost ring formed groove 32, whereby the foremost ring formed groove is placed closer to the sleeve 7 than the rearmost ring formed groove. Each of the ring formed grooves 31 and 32 forms in this case, as seen in fig. 5, only a section of a ring.

A spring 33 placed in the channel is acting upon the lock rod or lock with a spring power directed in the opposite direction of the sleeve.

The lock 12 is operated by means of the key 13 inserted into a keyhole 34 of the lock. The key is, in the riding mode of the bicycle, nearly hidden in the channel 30 of the lock housing 9. The key therefore doesn't bother the cyclist riding the bicycle in its inserted state. The key also could be removed from the lock for thereby avoiding the risk that the key by accident is activated when riding the bicycle, which then unfortunately could be brought into the parking mode where the bicycle cannot be steered.

The key will, when bringing the bicycle into parking mode, automatically be ejected nearly entirely out of the lock housing by means of the spring power of the spring. The cyclist therefore will hardly fail to see the key and to forget to take the key out of the keyhole.

Other types of locks could, within the scope of the invention, be used instead of the lock presented here, e.g. a combination lock.

The lock 12 is arranged in the lock housing 9 with the tongue 29 engaging the longitudinally extending groove 30 in the channel 26 and it is operated in the following way when rearranging the locking arrangement from parking mode to riding mode,
- turning the pair of handlebars 10 into the riding mode so that the transverse openings 23, 24 and 25 becomes in line with each other,
- turning the pawl 28 from the position in the rearmost ring formed groove 32 to a position in line with the tongue 29 in the longitudinally extending groove 30,
- displacing, against the spring power of the spring 33, the lock 12 with the lock rod 27 in the lock housing 9 into the direction of the foremost ring formed groove 31 until the lock rod 27 has penetrated the transverse openings 23, 24 and 25, and
- turning the pawl 28 into engagement with foremost the ring formed groove 31.

The bicycle now is brought into riding mode where the cyclist secularly can steer and ride the bicycle.

When rearranging the locking arrangement from riding mode to parking mode the lock is operated in the following way,
- turning the pawl 28 from the position in the foremost ring formed groove 31 to a position in line with the tongue 29 in the longitudinally extending groove 30,
- displacing by means of the spring power of the spring 33 the lock 12 with the lock rod 27 in the lock housing 9 into the direction of the rearmost ring formed groove 32 until the lock rod 27 has been withdrawn from the transverse openings 23, 24 and 25, and
- turning the pawl 28 into engagement with the rearmost ring formed groove 32.

The bicycle now is brought into parking mode where a thief cannot steer and ride the bicycle, which therefore will be of no interest for the thief.

Using a spring, which is acting upon the lock 12 make it easy to operate the lock. The lock can however be operated without such spring.

Very many thefts of bicycles are occasionally performed. A person being at a place where a bicycle is parked could be tempted to steel the bicycle for transport from the place if the bicycle is not secured against theft.

A potential thief could perhaps, if the bicycle in fact is secured, try to find out if the securing could be released. Usually he is however not disposing of tools, which could be used for that purpose.

Trying temporary to demount the pair of handlebars from the elongated connection member for thereby making it possible to penetrate the transverse openings 24 and 25 in the steering stem and sleeve, respectively with e.g. a pin would not be successful since the third transverse opening 25 is a blind hole implying that access to the transverse openings from the handlebar side is closed.

A potential thief could perhaps get the idea to remove the top screw 18 for thereby gaining access to the transverse openings and connect the sleeve 7 to the steering stem 4 and thereby to the pair of handlebars 10 by putting something into said transverse openings for in this way making it possible to ride the bicycle.

The top screw 18 is however, according to the invention, tightly screwed into the steering stem 4 by means of a special tool and the surface of the head 21 of the top screw 18 is moreover made smooth so that the potential thief would not be able to remove the top screw by using his hands only.

Mostly would a potential thief however try to demount the securing of the bicycle by means of blows with a present object like e.g. a stone.

The lock of the invention is however not easy to hit since most of the lock is hidden in the lock housing and the end face of the lock is a small target only.

A blow with e.g. a stone, which successfully is hitting the end face of the lock would however be transmitted to an area in the rearmost ring formed groove via the pawl of the lock with the result that a depression extending towards the steering stem could be made in the material of said area.

That implies that the lock rod 27 could be displaced a stretch corresponding to the depth of the depression and thereby be forced into engagement with the first transverse opening 23 in the steering stem so that it would be possible to ride the bicycle.

The depth of such depression could however not be very large. The end face of the lock rod therefore is arranged at a distance 34 from the first transverse opening corresponding to or being larger than the depth of the depression.

The distance between the face of the lock rod and the steering stem or the edge of the first transverse opening could according to the invention preferable be between 0,5 and 5 mm.

## Claims

1. A locking arrangement for a bicycle with a frame head tube (3) and a steering stem (4) which defines a steering axis (4') and rotate able is mounted in the frame head tube (3), comprising
- a transverse opening (23) formed in the steering stem (4),
- a lock housing (9) which defines an axis (9') and rigidly is attached to the sleeve (7),
- a lock rod (27) arranged for being displaced in the lock housing (9) between an advanced position where the lock rod (27) can extend into said transverse opening (23,24) and a retracted position where that is not possible,
- a lock (12) which is mounted in the lock housing (9) and is adapted to lock the lock rod (27) in both the advanced and retracted position, and
- a pair of handlebars (10) connected to the sleeve (7),
**characterized in**
- **that** a longitudinally extending channel (26) is formed in the lock housing, and
- **that** the lock (12) axially displaceable is mounted in the channel (26).

2. A locking arrangement according to claim 1, **characterized in,**
- **that** the transverse opening (23) in the steering stem (4) is a through opening,
- **that** a second transverse through opening (24) is formed in the steering stem (4) diametrical opposite the first one,
- **that** a third transverse opening (25) is formed in the sleeve (7), and
- **that** the third opening (25) is communicating with the second opening (24) in a specific angle position of the sleeve (7) in relation to the steering stem (4).

3. A locking arrangement according to claim 1 or 2 and where the lock (12) is of that kind which is formed with a pivotable pawl (28) and a tongue (29), **characterized in that** the channel (26) of the lock housing (9) is formed with a longitudinally extending groove (30) and a foremost and rearmost, seen in the opposite direction of the sleeve (7), at least partly ring formed groove (31,32), whereby the pawl (28) is engaging the foremost and rearmost ring formed groove (31,32) in the advanced and retracted locking position, respectively of the rod and the tongue (29) simultaneously is engaging the longitudinally extending groove(30).

4. A locking arrangement according to claim 1, 2 or 3, **characterized in that** a spring (33), which is placed in the channel (26), is acting upon the lock rod (27) or lock (12) with a spring power directed in the opposite direction of the sleeve (7).

5. A locking arrangement according to any of the claims 1 - 4, **characterized in that** the end face of the lock rod (27) is placed at a distance between 0,5 and 5 mm from the steering stem (4).

6. A locking arrangement according to any of the claims 1 - 5, **characterized in that** the lock rod (27) is attached to the lock (12).

7. A locking arrangement according to any of the claims 1 - 6, **characterized in that** the pair of handlebars (10) is connected to the sleeve (7) via an elongated connection member (8).

8. A locking arrangement according to claim 7, **characterized in that** the sleeve (7), the connection member (8) and the lock housing (9) form an integral unit.

9. A locking arrangement according to any of the claims 1 - 8, **characterized in** comprising an inner thread (17) formed at top of the steering stem (4), a top screw (18) with a head (21) and an outer thread (19) screwed into the inner thread (17) of the steering stem (4) by leaving a space between the head (21) of the top screw (18) and the upper end face (22) of the steering stem (4), and that the sleeve (7) is formed with an inward projecting collar (7') fitting into said space with a clearance in between.

10. A method for alternating locking and unlocking the locking arrangement according to claim 1 - 9, **characterized in** comprising
- that the pawl (28) is turned from a position in one of the ring formed groove (31,32) to a position in line with the tongue (29) while this is in engagement with the groove (31,32),
- that the lock (12) is displaced into the direction of the other ring formed groove (31,32),
- that the pawl (28) is turned into engagement with said other ring formed groove (31,32), and
- vice versa.
